# EUROPEAN PATENT APPLICATION

(11) **EP 1 403 357 A2**
(43) Date of publication of application: **31.03.2004**
(21) Application number: 03021658.4
(22) Date of filing: 26.09.2003
(51) Int. Cl.: C10G 1/10, B01J 19/12

(54) **Method for decomposing organic substance**

(30) Priority: 27.09.2002 JP 2002282497; 28.10.2002 JP 2002312330; 04.03.2003 JP 2003056773; 30.06.2003 JP 2003186905; 11.07.2003 JP 2003273210
(71) Applicant: Osada Giken Co., Ltd., Osaka-shi, Osaka 543-0021 (JP)
(72) Inventor: Osada, Hideharu, Nara-shi Nara 631-0007 (JP); Shimabara, Tatsutoshi, Fushimi-ku, Kyoto-shi, 2-2-1, Fukakusa-Nishiuracho Kyoto 612 (JP); Shibamoto, Hironobu, Osaka-shi Osaka 547-0016 (JP); Osada, Shoma, Ikoma-shi Nara 630-0201 (JP)
(74) Representative: Patentanwälte Hauck, Graalfs, Wehnert, Döring, Siemons, Schildberg

(57) **Abstract**

A method for simply decomposing and disposing organic substances while preventing occurrence of toxic substances, which method is directed, firstly, to a technique wherein photocatalyst powder is applied from the upper side with liquefied organic substances, and the photocatalyst powder is heated to between 50 and 400°C, secondly to a technique wherein photocatalyst powder is contacted with gaseous organic substances while the photocatalyst powder being heated to between 50 and 400°C, thirdly to a technique wherein an organic substance to be decomposed is introduced, in a state of gas, liquid or solid, into a suspension of photocatalyst's finely divided particles and is heated in a range of temperatures between 50 and 100°C, and fourthly to a technique wherein organic substances are decomposed at two or more stages.

## Description

### BACKGROUND OF THE INVENTION

### Field of the invention

The present invention relates to a method for decomposing organic substance(s).

### Prior Art

Hitherto, organic substances, particularly, plastic, have such problems that plastic when burnt for disposal causes toxic gases or makes incomplete combustion. It recently becomes hard to burn plastic under the policy of saving resources and at a standpoint of preventing the global warming or the greenhouse effect. Burying plastic for disposal has not enough spaces of places for such burying and causes a problem of environmental pollution.

Under the circumstances, it is most preferable to re-use (recycle) plastic, but, this is just hard. Recycling plastic is carried out mainly by crushing plastic to re-melt them and make them into fibers or blocks, or by introducing plastic wastes into the melting furnace for the purpose of molding again.

Another attempt has been carried out in such manner that plastic is subjected to thermal or pyrolytical decomposition to return to low molecules and be re-used. This method heats plastic to more than "pyrolysis temperature" (temperatures at the state having no oxygen, the terminology depicting the same hereunder) , breaking the carbon to carbon coupling of polymer and making them into low molecules, such as gasoline or naphtha.

In the case of the crushing plastic technique, crushing plastic is quite troublesome and uses, for example, a crusher to make plastic smaller in size. Any foreign objects, such as metal, if mixed in plastic possibly causes malfunction of the crusher. This technique can crush plastic into pieces of diameter of few millimeters, which pieces, however ordinarily, are not purposively re-melted and molded. Furthermore, the crushed plastic pieces are mixed with concrete to form blocks. The crushed plastic pieces are larger in size, and the plastic material merely has poor adhesiveness with cement, resulting in providing blocks with less strength, which blocks cannot be used equally to the conventional blocks.

In the case of the technique that introduces plastic into the melting furnace, the melted plastic when molded in a customary manner shows a problematic low quality. This must be caused by the matter of additives and mixing of foreign obj ects . Meanwhile, thermoplastic may have bridging to some extent upon molding. Such thermoplastic even when mixed with virgin resin are not purposively re-molded.

In burning plastic, dioxin is said to be caused between 300 and 600°C, while plastic does not burn under 300°C. Thus, burning plastic needs to be carried out at higher temperatures than 600°C. It is hard to burn plastic only by itself at those high temperatures. Hence, burning plastic requires much fuel to thereby be quite uneconomical. Besides, burning plastic at those high temperatures solves the problem of generating dioxin while since a large quantity of combustion (including those of plastic itself) is made for the operation, carbon dioxide occurs much. This is controversy to our national policy reducing carbon dioxide for a countermeasure against the global warming or the greenhouse effect.

The technique pyrolytically decomposing plastic to form low-molecules makes use of higher heating temperatures (600°C at minimum, 800°C at maximum) and undergoes a poor efficiency of energy. Furthermore, it is hard to heat plastic pieces to these temperatures. In detail, a technique heating plastic pieces merely placed in a container has a larger quantity of air to thereby hinder heat from being effectively transmitted to plastic, resulting in that heating is carried out more than necessity, leading to a large energy loss. Heavy oil when used in the heating operation has problems in respect of energy-saving and prevention of the global warming. There is also a fear of generation of dioxin correspondingly to kinds of plastic and extent of heating.

Recently, a technique heating plastic pieces with mixing plastic pieces with heated sand in order to improve heating efficiency has been invented. This makes higher the heating efficiency, while since plastic pieces are heated just to the pyrolysis decomposition temperatures, there is no fundamental solving of the problems.

The inventor found a technique heating functional powders to a predetermined temperature and causing plastic pieces to be disposed to contact with the heated powders and be decomposed, and filed a patent application therefor. The technique has an insufficiency or defect and the inventor now has achieved a method for decomposing plastic according to the present invention.

### SUMMARY OF THE INVENTION

Under the above circumstances, the inventor zealously studied and have accomplished the method for decomposing organic substances according to the present invention. The organic substances decomposing method is directed, firstly, to a technique wherein photocatalyst powder is applied from the upper side with liquefied organic substances, and the photocatalyst powder is heated to between 50 and 400°C, secondly to a technique wherein photocatalyst powder is contacted with gaseous organic substances while the photocatalyst powder being heated to between 50 and 400°C, thirdly to a technique wherein an organic substance to be decomposed is introduced, in a state of gas, liquid or solid, into a suspension of photocatalyst's finely divided particles and is heated in a range of temperatures between 50 and 100°C, and fourthly to a technique wherein organic substances are decomposed at two or more stages.

### DETAILED DESCRIPTION OF THE INVENTION

"Decomposing" referred to in the present invention signifies just changes of composition of organic substances. The decomposed organic substances do not necessarily need to serve as a material for any matters or a product and may be discarded as they are. Extent of decomposition includes the formation of powder or particles with molecules themselves being not decomposed, or the formation of low-molecules with molecules being pyrolytically decomposed.

A first characteristic of the present invention is to use photocatalyst powder. "Photocatalyst" referred to herein is a catalyst that is excited by application of electromagnetic waves to decompose and oxidize molecules near the catalyst. The catalyst is typically titanium oxide having anatase crystalline structure and is not limited thereto. Specific sizes of the powder are within users' discretion. The powder smaller in size shows excellent efficiency per weight and is preferably 50 nm or less. Specific surface areas are preferably 30m²/g or more and more preferably 35 to 75m²/g in respect of efficiency per weight and heat resistance.

The photocatalyst may be carried by a carrier, for example, porous materials such as silica gel, active carbon, silica sand, or microballoon. Preferable adhesive in case of using such carrier may be any materials (for example, inorganic substances such as cement, or silicon or the like) that are not likely to be decomposed by photocatalyst's oxidizing effect.

Furthermore, photocatalyst may be slicked to the carrier by use of both of aqueous resin (such as water-soluble resin, or emulsion type resin) and titanium alcoxide or cement (any of those set hard with hydraulic reaction).

The manner of fixing photocatalyst to the carrier is so provided that the aqueous resin is, first, applied to the carrier, and then cement and photocatalyst applied. An initial adhesiveness of the aqueous resin does first stick cement and photocatalyst. Cement when sets holds photocatalyst even when the aqueous resin is decomposed by oxidizing effect of photocatalyst.

The amount of photocatalyst to be carried or held by the carrier is at users' discretion and may be preferably generally about 1 to 10% of weight of the carrier depending upon difference in size of photocatalyst from the carrier irrespective of methods for sticking photocatalyst to the carrier.

The photocatalyst powder itself may be caused to agglomerate much to thereby be made larger (granulated). Adhesive for this purpose is preferably titanium alcoxide. Sizes of photocatalyst carried by the carrier and so granulated may be about several µ m to several mm.

The reason why photocatalyst powder is carried by the carrier or caused to agglomerate is that photocatalyst powder when too small in size (order of nm) is likely to be stirred up and is hard to be dealt with.

Photocatalyst powder may be mixed with any other particles, such as mere sand, metal particles (about 0.5 to 5mm in size), metal powder, etc., provided that they do not deviate from the gist of the present invention.

Next, Claims 1 to 3 will be explained firstly.

Liquefied organic substances referred to in Claim 1 may be organic substances liquefied at a time when applied, or solid that can be dissolved by solvent. The organic substances having high viscosity may be adjusted in viscosity by use of solvent. Also, suspension or emulsion but not those completely dissolved may be applicable. Fine grinded matters (fiber wastes, crushed substances, etc.,) may be mixed in the liquefied organic substances. That is, the organic substances in a state of being applicable in the form of liquid may be usable. viscosity of the organic substances is preferably as the same as water but is not limited thereto.

The organic substances may contain any matters that cannot be decomposed (organic or inorganic matters) or that to be decomposed quite slowly, and those matters may be removed by screening at a final stage.

Organic substances may be not only toxic ones such as polychloro biphenyl (PCB) but also any other ones, such as high polymer molecules, low-molecules, microbes, germs.

"applying from the upper side" means that liquid is sprayed, sprinkled, or applied dropwise, from the upper side, to the place where photocatalyst is filled, in other words, introducing the liquid from the upper side. The amount of liquid to be introduced may vary depending upon specific amount of photocatalyst and extent of stirring and is preferably a relatively small amount. For example, 20% solution of PCB (diluted by organic solvent) was properly applied 1 to 200g/min per 1 m² of photocatalyst filled about 5cm in depth.

The photocatalyst layer is preferably to be filled on a larger area. A belt conveyer system is preferable for performing a continuous operation. It is a preferable system that photocatalyst being stirred is transferred to have nothing sticking on the surface and then be returned to an original position. Photocatalyst having on the surface a decomposed substance such as carbon may be subjected to re-generating process (heating, etc) at the time during returning to the original position.

Depth of filling photocatalyst may vary depending upon efficiency of mixing, presence or non-presence of electromagnetic wave applying device, extent of applying electromagnetic waves and was preferably about 50mm. Features of vertically plural stages or an elongated configuration may provide that a capacity for filling photocatalyst in casings can be fully surely obtained.

The photocatalyst layer is heated to between 50 and 400°C. Heating the photocatalyst layer is the main gist of the present invention. In our experiment, in consideration of preventing occurrence of dioxin and the matter of the efficiency, 200 to 350°C was most effective. Any manners of heating will do, such as by a burner or an electric heater. The photocatalyst which is to be excited by application of electromagnetic waves (ultraviolet, visible ray, electron rays, etc) can be excited, also, by heating. In the present invention, heating is essential and application of electromagnetic waves is not needed although it is definitely preferable to apply electromagnetic waves in respect of better efficiency.

It is preferable to introduce oxygen or air as a resource of active oxygen since the photocatalyst is that performs oxidization and decomposition.

Furthermore, ozone may be supplied above the photocatalyst layer. Organic substances decomposed and gasified and not yet completely oxidized or completely decomposed do naturally move away from the surface of photocatalyst particles. Those so moved away are, like a chemical intermediate, occasionally to be harmful by themselves or able to compose harmful matters separately. However, the organic substances when moved away more than a given interval from the surface of photocatalyst are likely not to be subjected to oxidizing and decomposing capacity of photocatalyst. Thus, there are any cases that organic substances cannot be completely made harmless only by photocatalyst. Ozone covers this defect. Ozone that is gas flows similarly to the gas generated from decomposing. Since ozone has a quite strong oxidizing effect, it oxidizes and decomposes more those partially oxidized and decomposed by photocatalyst.

Concentration of ozone is preferably several ppm to several hundred ppm and may be more higher when there are many partially oxidized matters or matters not yet oxidized. Ozone may be produced outside the system to then be forcibly introduced into the system similarly to the resource of oxygen such as air. In case that oxygen exists in the system, ozone may be generated by an ozone generator (ultraviolet lamps, electrical discharge system, etc) in the system.

Unless particularly referred to, any wordings used hereunder that are the same as those expressed previously will have the same meanings and are used in Claims 1 to 3, those such as photocatalyst, electromagnetic waves, organic substances, etc.

Next, Claims 4 to 6 will be detailed.

This method relates to a gaseous organic substance which may be any gases, particularly, bad odor gas or harmful gas, for example, nitrogen or sulfur composites such as ammonia, mercaptan, and other chlorinated harmful substances or the like.

Ozone may be used here for assistance in the same manner as foregoing. Introducing air and others as the resource of oxygen may be performed similarly to the foregoing manner.

Photocatalyst may be filled in, carried by, sticked to, or fixed to a filter or separately provided porous material, other than merely being filled in the casing (reactor). A preferable style is that photocatalyst is provided with a form of a filter to allow gas to be disposed to pass through such filter.

Next, Claim 7 will be detailed.

The invention relates to a method performed with photocatalyst powder being suspended in a liquid. This method does not have a defect that photocatalyst powder is stirred up to accompany gas and move out of the system. In this regard, the methods disclosed in Claims 1 to 6 have special devices as providing a filter, causing photocatalyst to be carried by a carrier to prevent photocaralyst from being stirred up, and reducing speed of flow inside the reactor.

The invention suspends photocatalyst in water. Photocatalyst particles are not dissolved in water and are deposited when mixed with water. Smaller particles naturally suspend and are emulsified. Suspension referred to in the present invention shall include: such case of mere mixing having deposits without stirring; suspension; and emulsion.

This method essentially needs to be heated but not to be applied with electromagnetic waves. However, similarly to the foregoing inventions, it is preferable to apply electromagnetic waves to have excellent efficiency. Also, since photocatalyst provides oxidization and decomposition, it is preferable to introduce oxygen or air as a resource of active oxygen.

The suspension may be mixed with acid or alkali, for example, sodium hydroxide, sulfuric acid, hydrochloric acid, or the like. Other matters that is effective for absorbing or decomposing gases may be mixed. Organic substances that is decomposed by photocatalyst are not preferable.

The present invention has such two styles that substances to be disposed are introduced, in the form of gas, into a casing (reactor) or so in the form of liquid (including gases dissolved in liquid). In case of gas, gas is contacted with suspension to be disposed and moved out of the reactor. In case of liquid, liquid is mixed with suspension (irrespective of being dissolved or not) to be disposed and moved out of the reactor in the form of overflow, from a lower side, or by absorbing using a pump.

Methods for contacting gas with suspension may be babbling method, spraying method, countercurrent method or the like. The babbling method stores suspension in the reactor and blows the gas into the suspension. The spray method circulates suspension as spraying suspension from the upper part of the reactor while causing the suspension to oppose to rising gas, and collecting sprayed suspension at the lower part of the reactor and spraying suspension from the upper part repeatedly. The countercurrent method generates flow of suspension inside the reactor and blows gas against the flow.

In case of liquid and suspension, when liquid and suspension do mutually dissolve completely, liquid may be merely introduced. In case that liquid and suspension when do not mutually dissolve must be disposed while being stirred. Liquid not dissolving when remains or occurs after that disposal may be separated in a next process depending upon difference in specific gravity.

In the present invention, when gas or liquid to be disposed contain oxygen in amount necessary for oxidization, there is no need to additionally supply oxygen. However, when substantially having no oxygen like waste gas from combustion, air is to be introduced into the reactor. Before gas is introduced into the reactor, air may be mixed with gas or separately introduced. In case of liquid to be disposed, air may be blown previously into liquid or separately into reactor.

Contrary to the above, there are such cases that oxygen is not needed depending upon kinds and amounts of gas contents since water exists much to serve as oxidizing agent.

Next, the method disclosed in Claim 8 will be detailed.

This method decomposes liquefied or solid organic substances in two or more stages. In detail, the first stage changes liquid or solid to gas and the second stage further decomposes or oxidizes the gas.

The solid or liquefied organic substances referred to here include solid such as plastic, liquid such as fats and oils or organic solvent, and toxic matters such as PCB. Organic substances may be low-molecules or high polymer molecules.

The first decomposing device comprises at least an air introducing means, a heating means, and a stirring means. The air introducing means may be a mere opening, a piping or the like usable for introducing air. Piping may be placed inside the particles layer described later to introduce air into the particles layer. This air introducing means may stir particles by pressure from spout of air, serving also as a stirring means.

The heating means may be any that can heat the particles layer, such as an electric heater, a gas burner or the like. A temperature control means may be preferably provided to control temperatures.

Temperatures of heating are determined depending upon kinds of organic substances to be decomposed and particles to be used. Usually, 250 to 450°C may be preferable. In case that particles are photocatalyst and applied fully with electromagnetic waves, 250 to 350°C may be enough generally.

The stirring means stirring particles may be enough. Rotating a rod or blades may be readily used and vibrating usable also. The stirring means stirs the particles layer to improve efficiency of contacting between particles and organic substances.

Two kinds of particles are used in the present invention. One of them is particles not making reaction such as mere sand that are not dissolved or transformed depending on temperatures of heating. The particles may be silica sand, calcium carbonate, metal particles, stone powder, ceramic, etc. In case that the particles are used, organic substances are pyrolytically decomposed. Since existence of the particles causes heat to be transmitted uniformly, pyrolysis or thermal decomposition is possible at high efficiency.

The other kind of the particles is photocatalyst.

The first decomposing device may be provided with an electromagnetic waves applying means. It is because in case of using photocatalyst, efficiency varies depending upon presence or non-presence of the electromagnetic waves applying means (ultraviolet lamps, etc) although cases using particles other than photocatalyst are not influenced by the electromagnetic waves applying means. Since photocatalyst is excited by temperatures to some extent without the electromagnetic waves applying means, there is an effect of photocatalyst. But, when electromagnetic waves are applied positively, high effect of photocatalyst can be obtained.

The foregoing particles in the first decomposing device can have a next introduction of organic substances immediately after organic substances previously placed become gas when the operation is carried out at high temperatures and decomposition of organic substances is effectively performed. However, usually, decomposed substances are likely to stick on the surface of the particles. In this instance, it is preferable that the particles are once subjected to high temperatures to cause the decomposed substances to be fully decomposed and gasified, followed by introducing again organic substances. Temperatures in this case are about 250 to 500°C . This is regeneration of the particles.

Time of regeneration of particles may be shorter or longer than time of decomposition since it is determined depending upon conditions of temperatures and readiness of decomposing organic substances. To smoothly carry out the regenerating process, a regenerating means for particles may be separately provided at the first decomposing device. The particles are removed from the first decomposing device to be heated by the regenerating means, oxidizing and decomposing organic substances on the surface of the particles, followed by returning the particles to the first decomposing device.

For effectively regenerating the particles, the first decomposing device may be provided plurally to be operated alternately. In detail, one of the decomposing device does decomposing operation while the other regenerating so as to reduce loss of time as largely as possible.

The first decomposing device may be provided with a heat-eliminating (or cooling) means for keeping proper temperatures against rising of temperatures due to oxidization. Winding a cooling water coil around the first decomposing device, or providing air fins, etc., may be applied at users discretion.

A filter may be provided between the first and second decomposing devices, i.e., at an outlet of the first decomposing device, on a piping or a device connecting the first and second decomposing devices, or at an inlet of the second decomposing device. Structure of the filter is not particularly limited and may be an ordinary filter such as paper, unwoven fabric, cloth, readily replaceable. The filter may be much filled with absorbent such as zeolite, silica, kanumalite, or titanium oxide. Such filter when having tar sticked thereon can be conveniently readily regenerated by heating using a burner or the like. The filter may be adapted to be heated without being detached.

The filter is provided for preventing decomposed organic substances such as tar from entering the second decomposing device which decomposed organic substances such as tar may happen to accompany the gas and be discharged from the first decomposing device depending upon operation conditions of the first decomposing device and kinds of organic substances.

Various gases are discharged from the first decomposing device naturally depending upon kinds of organic substances to be decomposed, kinds of particles, temperatures for decomposition, etc. In case that the organic substance is plastic, particularly, polyethylene, most of the gases are organic substances, such as carbon dioxide, carbon monoxide, hydrocarbon of low boiling point to high boiling point, and alcohol, etc.

Gas discharged from the first decomposing device is introduced into the second decomposing device.

The gas when introduced into the second decomposing device may be reduced of temperatures to normal or appropriate temperature by introducing air. When temperatures are lowered to some extent, the electromagnetic wave applying means (ultraviolet lamps, etc) does not need a heat insulation means (such as a cover made of quartz glass for air-cooling the inside).

In case that temperature of gas from the first decomposing device is lower and reaction at the second decomposing device is made at higher temperatures, a heating means may be provided for heating operation. Thus, a temperature adjusting device that can perform cooling and heating may be provided.

The second decomposing device is in two types.

One of the types is that having at least the electromagnetic wave applying means and a filter carrying photocatalyst, which type of device may be naturally provided with the air introducing means and/or the heating means.

The air introducing means and the electromagnetic wave applying means may be those explained previously. The air introducing means referred to here may be an air introducing means for introducing air for cooling operation or additionally supplying oxygen between the first and second decomposing devices.

The filter carrying photocatalyst is a means in the form of a filter on which photocatalyst is held or supported. The filter referred to here signifies that passages are formed with a lot of small bores. Thus, any forms such as an item filled with particles, cloth, unwoven fabric, sponge, porous material, etc., will do.

Photocatalyst is carried or held by the filter. A method for causing the filter to carry photocatalyst is that photocatalyst is sticked to the filter by use of fluorine plastic not likely to be decomposed, silicon resin or titanium alcoxide, or by inorganic adhesive. Furthermore, photocatalyst may be sticked to the filter by both of the foregoing aqueous resin and cement. Any forms may be freely provided in such manner that particles carrying or supporting photocatalyst are filled in a block using a net or in a plate-like member, or photocatalyst particles are sticked to the foregoing cloth or unwoven fabric with a frame being put to the cloth or unwoven fabric. Positions to provide the filter may be any places that gas in the second decomposing device passes through. The second decomposing device may be divided into a plurality of rooms at whose walls the photocatalyst filter may be provided. Naturally, the whole surface of walls may be the filter.

Photocaralyst powder may float in a space in the second decomposing device. In this case, by lowering the speed of flow, the floating photocatalyst powder is prevented from being transferred together with the gas to the filter portion and causing clogging in the filter.

Preferably, the air introducing means is basically provided at the upstream side, so that it can contribute to reaction at an early stage.

At the second decomposing device, decomposition is preferably performed at low temperatures (50°C or less) but may be at 50°C or more. In detail, high temperature gas from the first decomposing device may be introduced as it is or cooled to temperatures of 50°C or more. Also, the second decomposing device may be provided with a heating means.

This signifies that photocatalyst reaction in the second decomposing device may be performed at normal temperature or high temperatures (50°C or more).

The foregoing various decomposed gases are introduced into the second decomposing device to be oxidized and more decomposed by photocatalyst reaction of photocatalyst and others and become carbon dioxide and water and be discharged as they are to atmosphere. In case that chlorinated composites or carbon monoxide, or the like remain, an additional absorbing device or adsorbing means may be provided.

Another type of the second decomposing device has not the electron rays applying means but has only the heating means. In this case, particles or photocatalyst to be filled may be particles, such as zeolite, silica, kanumalite, ceramic, silica sand, calcium carbonate, metal particles, stone powder, ceramic in addition to photocatalyst such as titanium oxide. Those may be selected depending upon gases to generate or other conditions.

This example also may be either types that particles and catalyst are carried or held by a filter-like matter, or the particles and catalyst are filled in the reactor as they are.

### BRIEF DESCRIPTION OF THE DRAWINGS

Fig. 1 is a schematic cross-sectional view showing an example of the method for decomposing liquefied organic substances according to the present invention.
Fig. 2 is a schematic cross-sectional view showing a reactor embodying the invention disclosed in Claim 4.
Fig. 3 is a schematic cross-sectional view showing a reactor embodying the invention disclosed in Claim 4.
Fig. 4 is a schematic cross-sectional view showing a reactor embodying the invention disclosed in Claim 7.
Fig. 5 is a partially exploded perspective view showing an example of a system embodying the method according to the present invention disclosed in Claim 8.

### PREFERRED EMBODIMENTS OF THE INVENTION

### Example 1

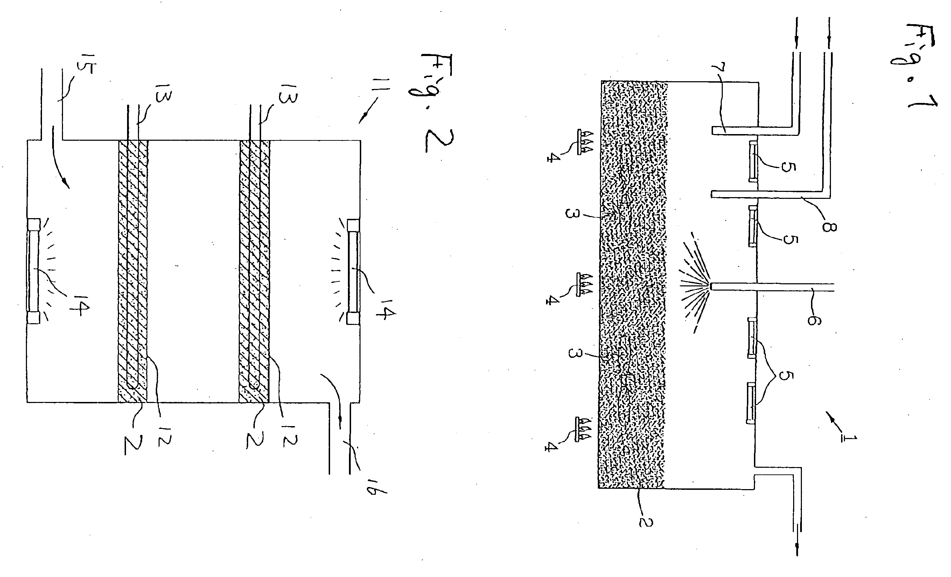

Fig. 1 is a schematic cross-sectional view showing an example of the method of decomposing liquefied organic substances disclosed in Claim 1. Photocatalyst powder 2 is filled at a lower part of a reactor 1. A stirrer 3 is mounted in the layer of photocatalyst powder. A heating device 4 (a gas burner) for heating the photocatalyst powder's layer is provided under the reactor 1. A number of ultraviolet lamps 5 are mounted on the ceiling part of the reactor 1 to apply ultraviolet to the photocatalyst powder layer. An inlet 6 for liquefied organic substances, an inlet 7 for air and an inlet 8 for ozone are each provided above the photocatalyst powder layer 2 to feed liquefied organic substances, air, and ozone, respectively.

The liquefied organic substance is sprayed in the reactor 1 to stick to the upper side of the photocatalyst powder layer. The photocatalyst powder layer is excited by application of ultraviolet to activate oxygen and others in the air, so that the sprayed organic substance is decomposed and gasified to remove from the photocatalyst. The photocatalyst powder layer is heated to about 200 °C and stirred. Gas that removed from the photocatalyst powder layer and still can be more decomposed or oxidized is oxidized and decomposed by ozone fed into the reactor 1 . It is not problematic that ozone oxidizes not only the gasified organic substance but also those sticked to the photocatalyst powder layer.

By the above operation, the organic substances fed into the reactor 1 are essentially all gasified. In case that the fed organic substance does not readily gasify and much remains as it sticks onto the surface of the photocatalyst powder, the photocatalyst may be reprocessed or regenerated merely by heating to between 350 and 450°C. The reprocessing by heating can be incorporated into a continuous course of processes in such manner or system that photocatalyst which being transferred by use of a belt conveyer or the like does perform decomposing of organic substances, the photocatalyst layer being continuously moved out of the system to be reprocessed (heated) and then moved back into the system.

### Example 2

Fig. 2 is a schematic cross-sectional view showing an example of a reactor 11 embodying the invention disclosed in Claim 4. The reactor 11 has inside two layers of a filter 12 made of unwoven fabric to whose fibers photocatalyst particles are sticked. Methods for sticking photocatalyst particles to the fibers of the unwoven fabric may be adhering or merely being physically caught or retained. The filter 12 has at its central part a heater 13 which is an electric heater in this example and may be any other heating device. The heater 13 here performs heating to 270°C. Ultraviolet lamps 14 are mounted on the ceiling part and the bottom of the reactor 11, so that the lamps 14 can apply ultraviolet to photocatalyst particles while they are adapted not to be directly subjected to heat from the heater 13.

Gas enters the reactor 11 through an inlet 15, passes through the two layers of filter 12, and is discharged from an outlet 16. Gas contents are inferred to be oxidized and decomposed: when gas contents contact with the photocatalyst particles in the filter 12; or by super oxide, hydroxy radical, etc., generated by photocatalyst. In this example, in case that air mixed with 50ppm of methyl mercaptan is fed into the reactor, the outlet side was quite odorless. Speed of flow was about 1 m/s at the central part of the reactor. A laboratory work was then attempted at normal temperatures with the heater turned off to find that a trace of odor was left.

### Example 3

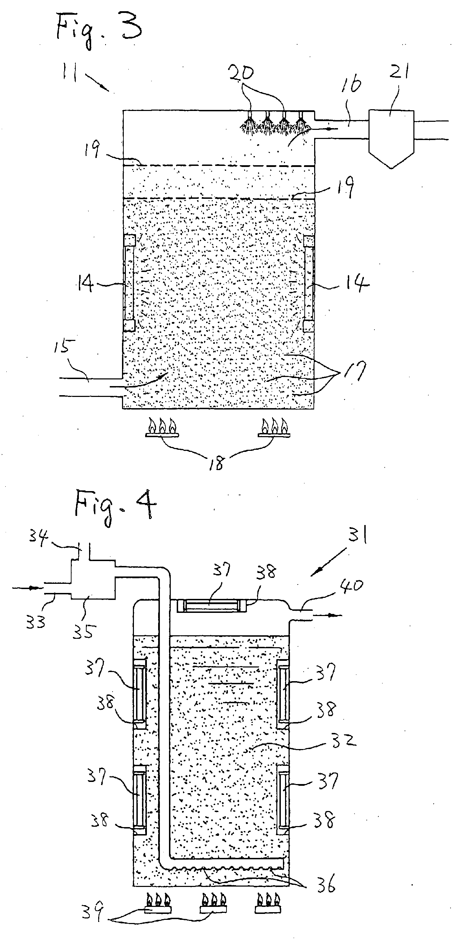

Fig. 3 is a schematic cross-sectional view showing an example of a reactor 11 embodying the invention disclosed in Claim 4 similarly to Fig. 2. In this example, photocatalyst particles 17 are freely filled in the reactor 11 and float therein depending upon flow of gas. Ultraviolet lamps 14 are mounted on the side walls. A heating device employs a gas burner 18. In this example, photocatalyst particles may use larger particles, for example, about 100 µ m in order to prevent, as much as possible, the photocatalyst particles from accompanying the gas.

A filter 19 is provided in two stages in the reactor 11, so that the photocatalyst particles collide against the filters 19 and the momentum toward the outlet is reduced. Thus, it is preferable to provide in plural stages a coarse filter but not a fine filter made of fibers and likely to have clogging. Furthermore, a nozzle 20 to spray water is provided near the outlet 16 for preventing photocatalyst particles 17 from being expelled. In this example, a dust collector 2 of cyclone type is mounted at the downstream side of the outlet 16 to keep photocatalyst particles from moving out of the system. Photocatalyst particles collected by the dust collector 21 may be re-used in the reactor.

### Example 4

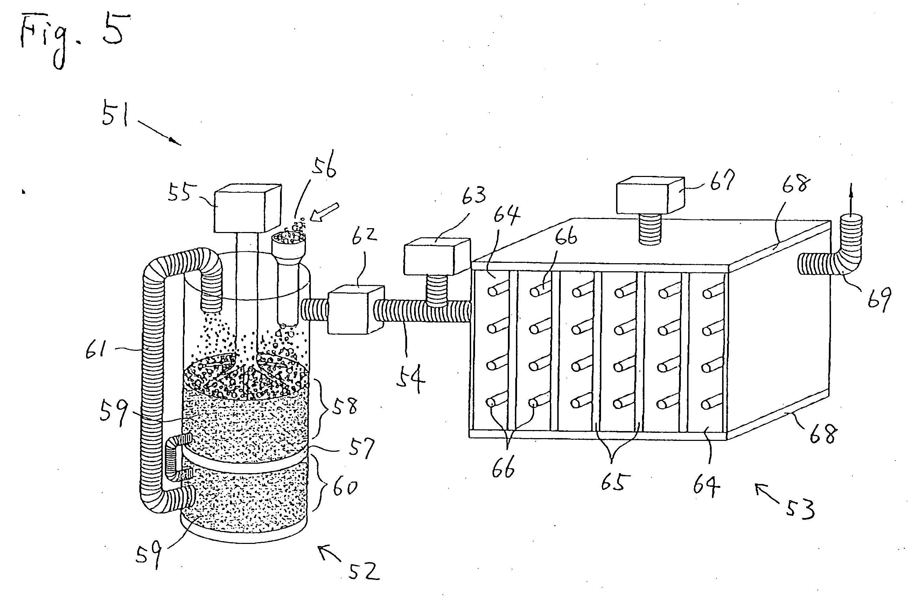

Fig. 4 is a schematic cross-sectional view showing an example of a reactor 31 embodying the invention disclosed in Claim 7. Suspension 32 is stored about 80% inside the reactor 31. Suspension 32 suspends photocatalyst (anatase type titanium oxide powder: 7 µ m in average size) in water and has precipitation of the photocatalyst powder when left at rest. Gas to be disposed and air are each fed, through an inlet 33 for organic substances and an inlet 34 for air, respectively, into a mixer 35. Gas to be disposed is mixed with air in the mixer 35 and then bubbled into the suspension 32. A lot of openings 36 are formed at an utmost end of a passage of gas/air mixture in the suspension 32, so that the gas/air mixture is made (through the openings 36) into small bubbles for improving efficiency of mixing.

An ultraviolet lamp 37 is housed in a transparent case 38 to be water-proofed. The suspension 32 is not subjected to stirring by a stirrer because the suspension is stirred by a force resulting from the gas being discharged. Otherwise, a stirring means (such as a screw or the like) may be provided separately. A heating device may be provided under the reactor 31 and employs a gas burner 39 in this example. The burner 39 heats the suspension 32 to 80°C. The gas disposed is discharged through a gas outlet 40 to a next process (including a case discharging the gas to the atmosphere).

### Example 5

Fig. 5 is a partially exploded perspective view showing an example of a system 51 using the method according to the present invention disclosed in Claim 8. The system 51 comprises a first decomposing device 52, a second decomposing device 53 and a connecting piping 54. The first decomposing device 52 has an air introduction means (consisting a mere air blower, a piping and an opening) 55, an organic substances introduction part 56, and a heating means 57. The air introduction means 55 serves also as a stirring means, so that air gushing out of the air introduction means 55 performs stirring. The air introduction means 55 has at its remote end six legs each provided with a lot of apertures allowing air to spout out. In this example, reaction is caused in batch system, so that organic substances are fed in a predetermined amount to cause reaction under an enclosed circumstance (except the outlet).

A reacting layer 58 is filled with particles 59 (silica sand No.7). The amount of particles to be filled and the depth of filling the particles may be determined occasionally.

A regenerating means 60 for the particles is provided under the heating means 57 and removes organic substances sticked on the surface of particles by heating, decomposing and oxidizing the organic substances. In detail, a proper amount of the particles 59 are taken out of the reactor layer 58 to be introduced into the regenerating means 60 and subjected to the regenerating process, and then moved back to the reacting layer 58 through a return piping 61. Returning the re-generated particles may be carried out by means of an air accompanying transmitting method, a bucket conveyer, or the like.

Gases generated, air and others are introduced into the second decomposing device 53 through the connecting piping 54. The connecting piping 54 is provided with a tar filter 62 and a cooling air introducing means 63. The tar filter 62 catches tar that occasionally occurs in the first decomposing device. In this example, the tar filter 62 is filled with particles of zeolite (about 5 to 15mm in size).

The second decomposing device 53 is divided into five rooms 64 in this example. Walls of the rooms 64 consist of filters 65 carrying photocatalyst powder. The filter 65 is woven out of fibers carrying photocatalyst. A method to cause fibers to carry photocatalyst is adhering using the foregoing aqueous resin (acryl emulsion in this example) and cement. By this, even when the aqueous resin is decomposed with oxidizing reaction of photocatalyst, the photocatalyst does less fall or accompany the gas since the photocatalyst is fixed by cement.

The rooms 64 are provided with a lot of ultraviolet lamps 66. Ultraviolet from the lamps 66 is applied to the photocatalyst in the filter 65 to cause reaction of photocatalyst, whereby gas passing through the filter 65 is subjected to oxidizing and decomposition.

Furthermore, the second decomposing device 53 has an air introduction means 67 for additionally supplying oxygen for oxidization. Besides, temperatures adjusting means 68 is mounted at the upper and lower ends of the second decomposing device 53 and performs heating and cooling like a combination of an air-conditioner and an electric heater. Otherwise, a mere heating device or a cooling device may be applicable. By the features, the gas as minimum molecules or molecules oxidized at maximum is discharged through an outlet 69. An absorbing means may be additionally provided for introduced organic substances that may contain chlorine atoms, etc., to generate chlorinated molecules. In case that plastic is polyethylene, polypropylene, polyester or the like, it is not problematic to discharge them as they are.

Next, an example of operation of the system in this example will be detailed.

Silica sand No. 7 (about 40kg) was placed in the first decomposing device shown in Fig. 5, to which crushed polyethylene (about 5 by 5mm square, about 2kg) was introduced, followed by closing a lid of the device. Silica sand was heated to about 350°C by the heating means. Air was introduced by the air blower and shooting of air stirred silica sand and plastic pieces.

After about 15 minutes, solid content almost disappeared.

Gas from the outlet is transmitted to the second decomposing device through the connecting piping 54. Air was fully introduced at the connecting piping to cool the gas to about 40°C. And gas(generated from decomposition of polyethylene) is then oxidized and decomposed by ultraviolet from the ultraviolet lamps and photocatalyst. The amount of photocatalyst powder applied on the whole-surface filters forming walls defining the rooms of the second decomposing device was about 2kg. The gas is given enough time to be stagnated in the second decomposing device so as to be completely oxidized and decomposed. In this example, the gas was decomposed and gasified in about one hour. The resultant gas (carbon dioxide, water, etc) was all safe and not problematic when discharged.

## Claims

1. A method for decomposing organic substances wherein a liquefied organic substance is applied, from an upper side, to photocatalyst powder, and the photocatalyst powder is heated to between 50 and 400°C.

2. A method for decomposing organic substances as set forth in Claim 1, wherein decomposing organic substances is performed with electromagnetic waves being applied to photocatalyst particles.

3. A method for decomposing organic substances as set forth in Claim 1 or 2, wherein the liquefied organic substance is a toxic content, such as PCB or the like.

4. A method for decomposing organic susbstances wherein a gaseous organic substance is caused to contact with photocatalyst powder, and the photocatalyst powder is heated to between 50 and 400°C.

5. A method for decomposing organic substances as set forth in Claim 4, wherein decomposing organic substances is performed with electromagnetic waves being applied to photocatalyst particles.

6. A method for decomposing organic substances as set forth in Claim 4 or 5, wherein the gaseous organic substance is a content having bad odor.

7. A method for decomposing organic substances wherein an organic substance to be discomposed is introduced, in a state of gas, liquid or solid, into a suspension of finely divided particles of photocatalyst and is heated in a range between 50 and 100°C .

8. A method for decomposing organic substances wherein a liquefied or solid organic substance is gasified by a first decomposing device and the gas is further decomposed or oxidized by a second decomposing device, the first decomposing device comprising an air introduction means, a heating means and a stirring means and being filled with finely divided particles, and the second decomposing device comprising an applying means for electromagnetic waves and having inside photocatalyst.

9. A method for decomposing organic substances wherein a liquefied or solid organic substance is gasified by a first decomposing device and the gas is further decomposed or oxidized by a second decomposing device, the first decomposing device comprising an air introduction means, a heating means and a stirring means and being filled with finely divided particles, and the second decomposing device comprising a heating means and having inside particles.
